(19) **Europäisches Patentamt / European Patent Office / Office européen des brevets**

(11) **EP 3 455 643 B1**

(12) **EUROPEAN PATENT SPECIFICATION**

(45) Date of publication and mention
of the grant of the patent:
**29.10.2025 Bulletin 2025/44**

(21) Application number: **17733198.0**

(22) Date of filing: **02.05.2017**

(51) International Patent Classification (IPC):
***G01S 5/02*** (2010.01)

(52) Cooperative Patent Classification (CPC):
**G01S 5/02**

(86) International application number:
**PCT/US2017/030512**

(87) International publication number:
**WO 2017/196584 (16.11.2017 Gazette 2017/46)**

(54) **POSITIONING SYSTEM**

POSITIONIERUNGSSYSTEM

SYSTÈME DE POSITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2016 US 201662335192 P**
**26.01.2017 US 201715416017**

(43) Date of publication of application:
**20.03.2019 Bulletin 2019/12**

(73) Proprietor: **Rosemount Inc.**
**Shakopee, MN 55379 (US)**

(72) Inventors:
• **BARTOV, Avishai**
**Hod-Hasharon (IL)**
• **ZLOTNICK, Yossi**
**Ramat-Hasharon (IL)**

(74) Representative: **Meissner Bolte Partnerschaft mbB**
**Patentanwälte Rechtsanwälte**
**Postfach 86 06 24**
**81633 München (DE)**

(56) References cited:
**US-A1- 2008 032 705      US-A1- 2009 070 797**
**US-A1- 2009 201 850      US-A1- 2012 087 272**

• **NISSANKA B PRIYANTHA ET AL: "The Cricket location-support system", PROCEEDINGS OF THE SIXTH ANNUAL ACM/IEEE INTERNATIONAL CONFERENCE ON MOBILE COMPUTING AND NETWORKING : AUGUST 6 - 11, 2000, BOSTON, MASSACHUSETTS, NEW YORK, NY : ASSOC. FOR COMPUTER MACHINERY, 2 PENN PLAZA, SUITE 701 NEW YORK NY 10121-0701 USA, 1 August 2000 (2000-08-01), pages 32 - 43, XP058322028, ISBN: 978-1-58113-197-0, DOI: 10.1145/345910.345917**
• **"IEEE Standard for Local and metropolitan area networks–Part 15.4: Low-Rate Wireless Personal Area Networks (LR-WPANs);IEEE Std 802.15.4-2011 (Revision of IEEE Std 802.15.4-2006)", IEEE STANDARD, IEEE, PISCATAWAY, NJ, USA, 5 September 2011 (2011-09-05), pages 1 - 314, XP068050187, ISBN: 978-0-7381-6683-4**
• **"IEEE Standard for Information Technology - Telecommunications and Information Exchange Between Systems - Local and Metropolitan Area Networks Specific Requirements Part 15.4: Wireless Medium Access Control (MAC) and Physical Layer (PHY) Specifications for Low-Rate Wireless Personal Area Networks (LR", IEEE STANDARD 802.15.4 - 2003, IEEE, NEW YORK, US, 1 January 2003 (2003-01-01), pages _1 - 670, XP017603617, ISBN: 978-0-7381-3686-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

The present disclosure relates to positioning systems. More specifically, the present disclosure relates to systems used to identify the locations of or track objects in a given area.

A Positioning System (PS) is a network of devices used to wirelessly locate objects or people inside a building or within dense industrial areas. A special design is required since global positioning system (GPS) systems are typically not suitable to establish indoor locations or other crowded locations as they require an unobstructed line of sight to four or more GPS satellites. Microwaves will be attenuated and scattered by roofs, walls and other objects and multiple reflections at surfaces cause multipath propagation serving for uncontrollable errors.

Time of flight (ToF) is the amount of time a signal takes to propagate from transmitter to receiver. Because the signal propagation rate is constant and known, the travel time of a signal can be used directly to calculate distance. Multiple (in GPS at least four satellites) measurements vs. multiple anchor stations can be combined with trilateration to find a location.

As speed of light is $3\times10^8$ m/sec, in radio frequency (RF) based systems, inaccuracy in clock synchronization is a key factor of the positioning error. In GPS, ToF generally requires a complicated synchronization mechanism to maintain a reliable source of time for sensors.

In addition, the accuracy of the ToF based methods often suffer from large multipath conditions in localization situations with dense populations, such as indoor locations and industrial environments which can be crowded, which is caused by the reflection and diffraction of the RF signal from objects.

Due to the attenuation and reflections caused by construction materials, it is desirable to have an unobstructed line of sight to at least three anchor points at any location that should be covered by the system. As a result, a larger number of anchor stations are required.

US2012087272A1 discloses a system for determining node locations comprises an interface for receiving a first and a second set of measurements at a first set of nodes at known locations.

US2008032705A1 discloses a technique for determining a location of a device within a wireless network. The network includes network nodes and a mobile device. In this system, a signal transmitted by the mobile device is received by multiple nodes. The signal transmitted by the mobile device is received at five nodes. Each node measures characteristics of the received signal, such as signal strength, or timing information. The distance from the node to the device may be estimated based on a time-based location technique, TOA or TDOA.

US2009201850A1 discloses a system for constructing a proximity-based ad hoc network among a plurality of sensors and for using such a network to perform location tracking based on time-coded data received from each sensors. US2009070797A1 discloses an apparatus for multi-purpose metering are disclosed. An example includes acquiring a rate of data transfer to/from the monitored location and comparing the acquired rate of data transfer to a threshold.

XP058322028 relates to applications running on mobile and static nodes to learn their physical location by using listeners that hear and analyse information from beacons spread throughout the building.

The invention is defined in the annexed claims.

BRIEF DESCRIPTION OF THE DRAWINGS

FIG. 1 shows a block diagram of a positioning system in accordance with one embodiment of the present disclosure.

FIG. 2 is a block diagram of an anchor station in accordance with one embodiment of the present disclosure.

FIG. 3 is a block diagram of a mobile station in accordance with one embodiment of the present disclosure.

FIG.4 is a block diagram showing a central location anchor stations and a mobile station.

DETAILED DESCRIPTION OF ILLUSTRATIVE EMBODIMENTS

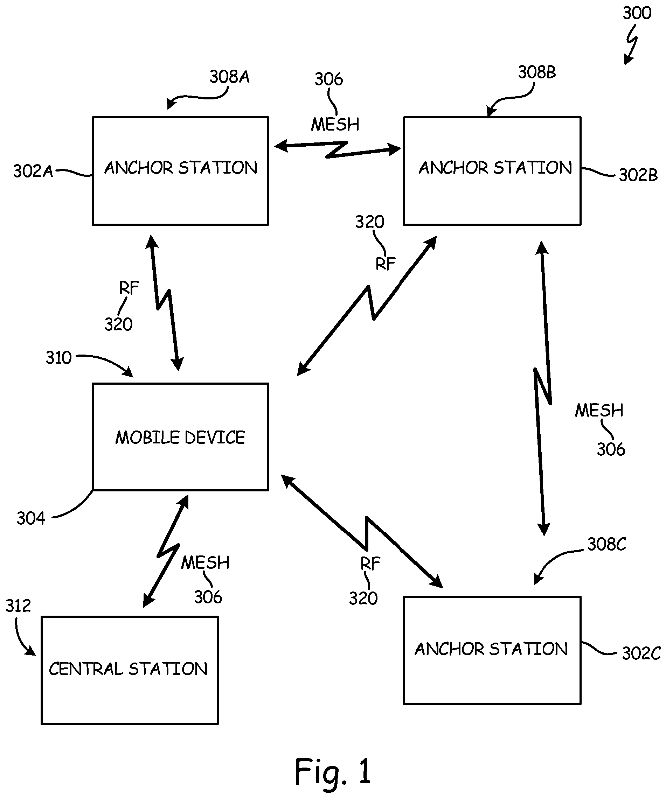

In one specific configuration, the system is based on a commercially proved industrial mesh network such as WirelessHART® network (IEC 62591), and is shown in block diagram form in FIG. 1.

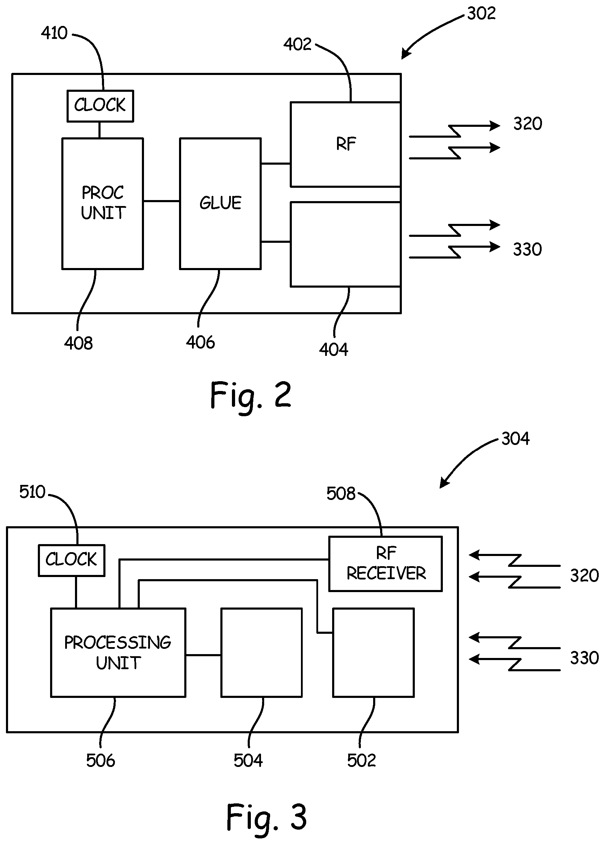

FIG. 1 shows a system 300 having plurality of anchor stations (or "beacons") 302 (three anchor stations 302A, 302B, and 302C shown in FIG. 3, and described in greater detail below) which are disposed in known positions, and a mobile station (also called a "tag", "portable unit" or PU") 304 (described in greater detail below) for which a position 310 is desired to be determined. Anchor stations 302 are in one embodiment part of a wireless network mesh 306 such as a WirelessHART® network. In operation, the plurality of anchor stations 302 are positioned at known locations 308A, 308B, and 308C around an area to be monitored. A mobile station 304 is located on or in close proximity to an object for which the position 310 is desired to be known. The object may be, by way of example only and not by way of limitation, a piece of inventory or a person.

In one embodiment as shown in FIG. 1, to determine a distance from an anchor station 302 to the mobile station 304, the anchor station 302 transmits an RF message 320 (i.e., a WirelessHART® message). As discussed below, WirelessHART® signals allow for synchronization as they may contain synchronization information, and allow for transmission of data as well as is known in the art. Using this synchronization and data transmission capability allows the RF pulse to be used as a unique synchronization pulse, so that it is possible to know which anchor station 302 or mobile station 304 is transmitting in addition to when the transmission is made. The time difference between transmission of the RF pulse and receipt of a response allows for a determination of the distance between the mobile station and the transmitting anchor station 302. A location for the mobile station may be determined using distance calculations from three separate anchor stations, for example using trilateration.

TDMA is a known standard for sharing a frequency channel on a network, by dividing the signal into multiple time slots. Each station, such as anchor stations 302 described herein, may share the frequency being used for pulses by being assigned a specific time slot for transmissions. In one embodiment, a central station 312, having received information from one or more mobile stations 304 regarding its/their position(s), uses the determined positions to adjust time slotting within TDMA. The central station 312 is used in the system 300, and is connected with the mesh 306 to receive information from one or more mobile stations 304. Time slots for anchor stations 302 are assigned by the central station 312. Any appropriate communication technique may be employed including CDMA techniques or other time and/or frequency slotting or sharing techniques. Alternatively or in addition, the anchor stations 302 may communicate directly with the central station 312.

In one embodiment, location information for one or more mobile stations 304 is used to adjust time slots for the various anchor stations. For example, when a position 310 of a mobile station is closer to some anchor stations 302 than others, the time slots for those anchor stations 302 at a greater distance may be expanded, allowing for pulse propagation and receipt without overlap from other anchor stations 302 due to distance. The central station 312 in one embodiment monitors distances from each line of sight anchor station 302 to each mobile station 304, and adjusts the time slots for the anchor stations according to expected propagation times, to reduce crosstalk between anchor stations 302. Further, pulse coding and different frequencies including spread spectrum techniques may also be used to reduce crosstalk between close anchor stations 302 or other anchor stations.

The anchor system stations 302 are all registered devices on the network 300, so each anchor point 302 is a WirelessHART® device with an RF transmitter 402. In addition, the anchor station 302 contains an optional communication module 404 that may communicate using communication signals 330, and some glue logic 406.

Details of an anchor station 302 are shown in FIG. 2. Each anchor station 302 includes in one embodiment an RF transmitter (i.e., WirelessHART®) 402, communication module 404, glue logic 406 to allow interface between various more complex logic circuits such as the RF transmitter 402 and communication module 404, a processing unit 408, or the like within the anchor station 302, and a clock 410. Glue logic 406 is known in the art and will not be described further herein. Also, WirelessHART® is a known standard for wireless sensor networking based on the Highway Addressable Remote Transducer (HART®) Protocol. In one embodiment, the anchor stations 302 are part of a mesh network of devices, such that each anchor station 302 is a WirelessHART® device on the wireless mesh network 306. Clock 410 is operatively coupled in one embodiment to processing unit 406 to allow processing unit 406 to determine a time of transmission of signals such as RF signal 320. In another embodiment, clock 410 may be a part of processing unit 406.

As illustrated in FIG. 3, in one configuration, the mobile station 304 is also a WirelessHART® device with an optional communication unit 502, optional GPS unit 504, a small processing unit 506, and an RF receiver 508.

The mobile station 304 includes in one embodiment an optional communication module 502, an optional GPS unit 504 for use in outdoor locations, a processing unit 506, an RF receiver 508, and a clock 510. RF receiver 508 is operatively coupled to processing unit 506. Clock 510 is operatively coupled in one embodiment to processing unit 506 to allow processing unit 506 to determine a time of receipt of signals such as RF signal 320. In another embodiment, clock 510 may be a part of processing unit 506.

In order to calculate its positioning, the mobile station 304 measures the distance to at least three anchor stations 302. Three anchor stations 302 allow for adequate determination of position, for example by trilateration, for a mobile station 304 that is in the line of sight of each of the anchor stations 302, but in case there are more anchor points 302 in the area, the redundancy can be used to improve the robustness of the measurement. While three anchor stations 302 (respectively, 302A, 302B, and 302C) are shown in FIG. 3, it should be understood that for complete coverage of an area, additional anchor stations may be used to increase the accuracy of position 310 determination, and to provide more potential line of sight options for all parts of the area to be covered by the system 300. Further, while one mobile station 304 is shown, multiple mobile stations 304 may be disposed within the area to be monitored, and the system 300 may use the same plurality of anchor stations 302 transmitting RF signals to determine multiple locations 310 of multiple mobile stations 304. The mobile station 304 reports the acquired information to a central station 312 via the network 306. The central station 312 may run an algorithm that optimizes the TDMA time slots according the current positions 310 of mobile stations 304 and may modify the network parameters accordingly. Within the mesh network, since locations of anchor stations 302 may be transmitted over the network, anchor stations 302, mobile stations 304 or the central station 312 may, in various embodiments, make a determination of the position of a mobile station 304.

In some situations, position of a mobile station may be determined using fewer than three anchor stations. Such a situation includes by way of example, but is not limited to, where there is some external information known about the mobile station, such as that it is located in a corridor or other known confined area, or where other tracking information is known for the mobile station. In such situations, position may be determined using as few as one anchor station.

A positioning system (PS) is provided in one embodiment in which a network of devices is used to wirelessly locate objects or people inside a building or within dense industrial areas. A system embodiment is provided that does not necessarily rely on GPS for location determination. Further, microwaves will be attenuated and scattered by roofs, walls and other objects especially in an indoor environment. Still further, multiple reflections at surfaces can cause multi-path propagation resulting in uncontrollable errors.

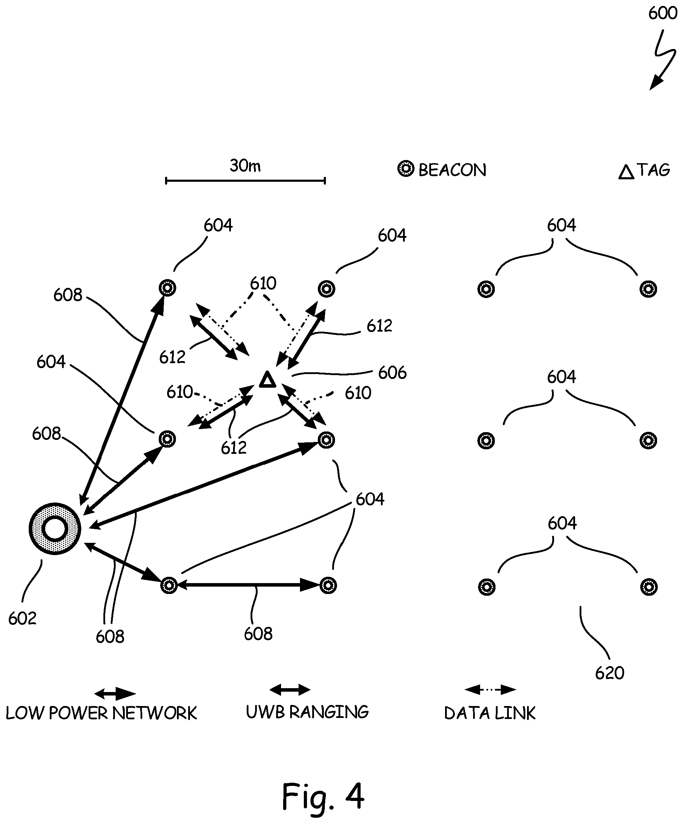

An embodiment 600 of a PS using ultra-wide band communication between beacons and tags of a system is shown in block diagram in FIG. 4. PS 600 comprises in one embodiment an application server 602, a plurality of beacons 604, and at least one mobile tag 606. In this embodiment, a tag 606 is a portable component that can be attached to or otherwise carried by persons or equipment that is to be tracked by the system 600. A beacon 604 is a fixed position, static anchor placed at apredefined coordinate of a positioning arena or area 620. In one embodiment, a plurality of beacons 604, arranged in an array such as that shown in FIG. 4, are positioned in the arena 620 to allow for all locations within the arena 620 to be visible by more than one beacon 604, and preferably by at least three beacons 604. Under some conditions, range measurements from the tag to at least three beacons 604 will provide enough information to determine a position of the tag 606 within the arena 620.

The application server 602 in one embodiment prepares and sends setup and configuration information to the beacons 604. The application server 602 also in one embodiment receives and processes position information for the tag 606, and other information from the beacons 604, for the purpose of displaying the position of the tag 606 to an end user, for archiving, or for any other further analysis. While one tag 606 is shown, it should be understood that many tags 606 may be at positions within the arena 620. The application server 602, in conjunction with the beacons 604, is used in one embodiment to monitor the positions of a plurality of tags 606 within the arena 620. The application server 602 in one embodiment communicates with the beacons 604 via a low power network as indicated in lines 608, described further below.

The beacons 604 communicate with tag 606 in one embodiment along data links illustrated as lines 610 using Ultra-Wide Band (UWB) technology as indicated at by UWB ranging signal lines 612. UWB offers the potential of achieving high ranging accuracy through signal time of arrival (TOA) measurements, even in harsh environments, due to its ability to resolve multipath signals and to penetrate obstacles. For example, information related to a separation distance between a pair of nodes A and B in a UWB network can be obtained using measurements of signal propagation delay, or time-of flight

(TOF) $T_f = \dfrac{d}{c}$ , where d is the actual distance between the two nodes and c is the speed of electromagnetic waves (c ~ $3*10^8$ m/s). Nodes A and B in various embodiments may be multiple beacons 604, or a beacon 604 and a tag 606, or multiple tags 606. In one embodiment, tags 606 are beacons dedicated to being mobile position locators.

The IEEE 802.15.4a-2011 standard is the first UWB-based standard for low-rate wireless networks with localization capability. However, other ultra-wide band communication techniques may also be employed.

For example, assume a first node A transmits to a second receiving node B a packet that contains the timestamp $t_1$ at which A's packet was sent. Node B receives the packet at time $t_2$. Under ideal conditions, that is, when node clocks of nodes A and B are perfectly synchronized to a common time reference, time of flight ($T_f$) can be determined at node B as $T_f = t_2 - t_1$. The distance between nodes A and B can be estimated in this one-way ranging using $T_f$. One-way ranging, however, requires very accurate synchronization between nodes that is very difficult to maintain with low cost electronics. For example, a relatively small 10nsec synchronization error between nodes A and B will yield a 3 meter ranging error.

In practice, TOF estimation is often done with two-way ranging (TWR) (without a common time reference). In TWR, node A transmits a packet to node B, which replies by transmitting an acknowledgment packet to node A after a response delay $T_d$. The round trip time (RTT) at node A is determined by $T_{RT} = 2T_f + T_d$, from which the distance can be estimated assuming $T_d$ is known. Knowing $T_d$ and $T_{RT}$ allows calculation of $T_f$.

By definition, UWB (IEEE 802.15.4a-2011 based) TWR sequencing is done between two nodes. Theoretically, (according to the standard), the number of measurement that can be done in parallel (on the same channel) without crosstalk is limited to 2 or 4 depending on the channel.

Due to the attenuation and reflections in some environments, such as those caused by construction materials and the like, it is desirable to have an unobstructed line of sight from a mobile beacon (such as a tag 606) to at least 3 beacons (such as beacons 604) when the mobile beacon/tag is at any location that should be covered by the system 600. As a result, a large number of beacons 604 may be used.

Use of a large number of beacons 604 may put restrictions on the cost of installation of the beacons 604. It is therefore desirable that the beacons 604 be at least partially battery powered, and that the communication (such as on a low power network 608) from beacons 604 to the application server 602 be wireless. In some embodiments, beacons may use other forms of energy, such as that harvested in known ways, for at least a part of their power.

A PS such as system 600 may also employ thousands of tags for determining the positions of items and/or personnel. For positioning updates (according to the system 600's or the tag 606's specific update rate), each of the tags 606 should be involved in at least three TWR sequences with beacons 604 in order to be able to estimate its current position. In general, the measurement rate is a multiplication of the number of tags 606, the measurements per tag 606, and the update rate.

A TWR round trip time is typically on the order of 1 millisecond. For a system with thousands of tags 606 and an update rate on the order of few to tens of seconds, that means that coordination of the TWR measurement is carefully controlled to allow a high number of TWR measurements without crosstalk.

In one embodiment, in a TWR, node B is armed, waiting for a poll from node A. In order to preserve battery life on node B (either tag or beacon), it is desirable that node B will start listening just before system A is about to send the poll. In one embodiment, an application server such as application server 602 sends scheduling information to the beacons 604, such as to node B, so that the beacons 604 are activated for listening just in time before transfer of a poll. In one embodiment, this is done over the IEEE 802.14.4-2003 compliant network.

Another function of the PS 600 is to continuously transfer information from the beacons 604 to the central application station 602. The data transferred between the beacons 604 and the central application station 602 might be either the raw ranging measurements or the calculated position of a tag 606 (depending on the configuration of the system 600). The information about raw measurements, such as TWR measurements and the like, is in one embodiment, done over the IEEE 802.14.4-2003 compliant network.

IEEE 802.15.4-2003 deals with low data rate but very long battery life (months or even years) and very low complexity. The standard defines both the physical (Layer 1) and data-link (Layer 2) layers of an open system interconnection (OSI) model. The first edition of the 802.15.4 standard was released in May 2003. Several standardized and proprietary networks (or mesh) layer protocols run over 802.15.4-based networks, including IEEE 802.15.5, ZigBee, 6LoWPAN, WirelessHART®, and ISA100.11a.

FIG. 4 is a diagram showing communication between an application server 602, beacons 604, and a portable tag 606. In one embodiment, a wireless network such as a WirelessHART® network is used as a backbone for the positioning system that uses UWB (e.g., IEEE 802.15.4a-2011) for range measurements. The low power network used to communicate with beacons 604 is illustrated at 608, along with the ultra-wide band ranging signal 612 and the data link 610 between a tag 606 and one or more beacons 604. In the example illustrated, beacons 604 are distributed across the facility (e.g., the arena 620) with a spacing of approximately 30 meters.

Embodiments of the present disclosure can be used in indoor, outdoor or hybrid environments. Communication can be in accordance with any standard and is not limited to a mesh network type communication system. The term "RF" refers to radio frequency of any appropriate wavelength. As used herein, the term "anchor" refers to a base transmitter whose location is known and is used as a reference location in determining location. The term "mobile device" refers to the device, such as a mobile station, whose location is being identified. The processing unit which is used to determine location may reside in the mobile station, in one or more of the anchor stations, at a central station, or at some other location.

An optional GPS module such as module 504 shown above, may be provided in a mobile station (such as a tag 606) and may be used when a GPS signal is available. A low power communication protocol (i.e., 608) such as those based on the IEEE 802.15.4-2003 physical layer may be used as a backbone for a positioning system that uses robust ranging achieved through the use of a low power UWB ranging and communications protocol such as those based on IEEE 802.15.4a-2011. However, other ranging and communication protocols and techniques may be used to implement the embodiments of the disclosure. The configuration provides accurate low power location detection that is substantially immune from multipath errors. Novel arbitration techniques allow location monitoring of many thousands of tags. The backhaul communication between beacons and the server preferably employs a low power communication technique such as WirelessHART®, ISA100, Zigbee® and Bluetooth® Low Energy, and LORA® based WAN, or others.

**Claims**

1. A positioning system (600), comprising:

   a plurality of beacons (604), each of which are at least partially battery powered and are configured for wireless communication;
   an application server (602) configured to communicate wirelessly with the beacons (604) based on a communication standard; and
   a tag (606) configured to perform time synchronization with the plurality of beacons (604), wherein time synchronization between the plurality of beacons (604) and the tag (606) is configured for two way ranging (TWR) between a beacon of the plurality of beacons (604) and the tag (606),

wherein the beacon (604) is configured to start listening just before the tag (606) is about send a poll, and

wherein the application server (602) is further configured to transfer scheduling information to the beacons (604) to activate said beacons (604) for listening just in time before transfer of the poll and thus to prepare for a TWR measurement just prior to an initiation of the TWR measurement.

2. The positioning system (600) of claim 1, wherein the communication standard comprises an IEEE 802.15.4-2003 compliant protocol network, or wherein the communication standard comprises WirelessHART®.

3. The positioning system of claim 1, and further comprising:

the tag configured to communicate with the plurality of beacons, wherein ranging between the tag and the plurality of beacons is based on ultrawide band (UWB) technology,

optionally wherein the UWB technology is compliant with a communication standard,

optionally wherein the communication standard is an IEEE 802.15.4a-2011 compliant standard.

4. The positioning system (600) of claim 1, wherein coordination of TWR measurements between a beacon (604) of the plurality of beacons (604) and the tag (606) is based on an inherent time synchronization mechanism of an IEEE 802.15.4-2003 compliant network.

5. The positioning system of claim 1, wherein the application server (602) is configured to assign time slots for TWR measurements.

6. The positioning system of claim 1, wherein the application server (602) is further configured to assign time slots for TWR measurements between a beacon (604) of the plurality of beacons (604) and the tag (606), in which information that defines time slots for TWR between beacons (604) and tags (606) is transferred from the application server (602) to the beacons (604) via an IEEE 802.15.4-2003 compliant network,

optionally wherein the time slots for TWR measurements are assigned to prevent cross talk between multiple TWR measurements.

7. The positioning system (600) of claim 1, wherein the plurality of beacons (604) are configured to transmit information related to raw TWR measurements the application server (602) through an IEEE 802.15.4-2003 compliant network.

8. The positioning system of claim 1, wherein information related to a position of the tag (606) is transferred from at least three of the plurality beacons (604) to the application server (602) through an IEEE 802.15.4-2003 compliant network.

9. The positioning system of claim 1, wherein the application server (602) is further configured to transfer setup and configuration information for the plurality of beacons (604), including beacon positions, to the plurality of beacons (604) through an IEEE 802.15.4-2003 compliant network.

10. A method of determining a position of a mobile tag (606) in a system comprising an application server (602) and a plurality of fixed location beacons (604), the beacons (604) being configured to start listening just before the mobile tag (606) is about send a poll, and the mobile tag (606) being configured to perform time synchronization with the plurality of beacons (604), wherein time synchronization between the plurality of beacons (604) and the tag (606) is configured for two way ranging (TWR) between a beacon of the plurality of beacons (604) and the tag (606), comprising:

connecting the plurality of beacons (604) and the application server (602) with a wireless communication network;

assigning, at the application server (602), a plurality of time slots for two way ranging operations between a beacon of the plurality of beacons (604) and the mobile tag (606);

ranging the mobile tag (606) with respect to at least three beacons of the plurality of beacons (604); and

transferring mobile tag information from the plurality of beacons (604) to the application server (602),

the method further comprising transferring scheduling information from the application server (602) to the beacons (604) to activate said beacons (604) for listening just in time before transfer of the poll and thus to prepare for a TWR measurement just prior to an initiation of the TWR measurement.

11. The method of claim 10, wherein ranging comprises:

transmitting from a beacon of the plurality of beacons (604) a packet with a known transmit time; and

receiving at the beacon (604) a return signal in response to receipt of the packet from the mobile tag.

12. The method of claim 10, wherein the wireless communication between the beacons (604) to the application server (602) is performed based on a communication standard, wherein the communication is performed on an IEEE 802.15.4-2003 compliant protocol network, wherein the communication is performed on a WirelessHART® network, wherein the ranging between the tag (606) and a beacon (604) of the plurality of beacons (604) is based on ultra-wide band (UWB) technology compliant with a communication standard, or wherein the ranging is performed over an IEEE 802.15.4a-2011 standard compliant network,
optionally, wherein time synchronization for the plurality of beacons (604) and the tag (606) for the coordination of ranging measurements is based on an inherent time synchronization mechanism of an IEEE 802.15.4-2003 compliant network.

13. The method of claim 12, wherein information that defines the plurality of time slots for ranging between the plurality of beacons (604) and the tag (606) prevents cross talks between multiple measurements.

14. The method of claim 13, wherein the information that defines the plurality of time slots is transferred from the application server (602) to the plurality of beacons (604) via an IEEE 802.15.4-2003 compliant network.

15. The method of claim 11, and further comprising transferring information related to ranging measurements from the plurality of beacons (604) to the application server (602) through an IEEE 802.15.4-2003 compliant network, transferring information related to tag positions from the plurality of beacons (604) to the application server (602) through an IEEE 802.15.4-2003 compliant network or transferring remote setup and configuration information for the plurality of beacons (604) including positions for the plurality of beacons (604) from the application server (602) to the plurality of beacons (604) through an IEEE 802.15.4-2003 compliant network.

**Patentansprüche**

1. Positionierungssystem (600), umfassend:

eine Vielzahl von Beacons (604), von denen jedes zumindest teilweise batteriebetrieben und für eine drahtlose Kommunikation konfiguriert ist;
einen Anwendungsserver (602), der dazu konfiguriert ist, drahtlos mit den Beacons (604) basierend auf einem Kommunikationsstandard zu kommunizieren; und
ein Tag (606), das dazu konfiguriert ist, eine Zeitsynchronisation mit der Vielzahl von Beacons (604) durchzuführen, wobei eine Zeitsynchronisation zwischen der Vielzahl von Beacons (604) und dem Tag (606) für eine Zwei-Wege-Entfernungsmessung (TWR) zwischen einem Beacon der Vielzahl von Beacons (604) und dem Tag (606) konfiguriert ist,
wobei das Beacon (604) dazu konfiguriert ist, mit Abhören zu beginnen, kurz bevor das Tag (606) eine Abfrage sendet, und
wobei der Anwendungsserver (602) ferner dazu konfiguriert ist, Planungsinformationen an die Beacons (604) zu übertragen, um die Beacons (604) zum Abhören gerade rechtzeitig vor einer Übertragung der Abfrage zu aktivieren und somit eine TWR-Messung kurz vor einer Einleitung der TWR-Messung vorzubereiten.

2. Positionierungssystem (600) nach Anspruch 1, wobei der Kommunikationsstandard ein IEEE-802.15.4-2003-konformes Protokollnetzwerk umfasst oder wobei der Kommunikationsstandard WirelessHART® umfasst.

3. Positionierungssystem nach Anspruch 1 und ferner umfassend:

das Tag, das dazu konfiguriert ist, mit der Vielzahl von Beacons zu kommunizieren, wobei eine Entfernungsmessung zwischen dem Tag und der Vielzahl von Beacons auf der Ultrabreitbandtechnologie (UWB-Technologie) basiert,
wobei die UWB-Technologie optional mit einem Kommunikationsstandard konform ist,
wobei der Kommunikationsstandard optional ein IEEE-802.15.4a-2011-konformer Standard ist.

4. Positionierungssystem (600) nach Anspruch 1, wobei eine Koordination von TWR-Messungen zwischen einem Beacon (604) der Vielzahl von Beacons (604) und dem Tag (606) auf einem inhärenten Zeitsynchronisationsmechanismus eines IEEE-802.15.4-2003-konformen Netzwerks basiert.

5. Positionierungssystem nach Anspruch 1, wobei der Anwendungsserver (602) dazu konfiguriert ist, Zeitschlitze für TWR-Messungen zuzuweisen.

6. Positionierungssystem nach Anspruch 1, wobei der Anwendungsserver (602) ferner dazu konfiguriert ist, Zeitschlitze für TWR-Messungen zwischen einem Beacon (604) der Vielzahl von Beacons (604) und dem Tag (606) zuzuweisen, wobei Informationen, die Zeitschlitze für TWR zwischen Beacons (604) und Tags (606) definieren, über ein IEEE-802.15.4-2003-konformes Netzwerk von dem Anwendungsserver (602) zu den Beacons (604) übertragen werden, wobei optional die Zeitschlitze für TWR-Messungen zugewiesen sind, um Übersprechen zwischen mehreren TWR-Messungen zu verhindern.

7. Positionierungssystem (600) nach Anspruch 1, wobei die Vielzahl von Beacons (604) dazu konfiguriert ist, Informationen in Bezug auf TWR-Rohmessungen über ein IEEE-802.15.4-2003-konformes Netzwerk an den Anwendungsserver (602) zu übertragen.

8. Positionierungssystem nach Anspruch 1, wobei Informationen in Bezug auf eine Position des Tags (606) über ein IEEE-802.15.4-2003-konformes Netzwerk von mindestens drei der Vielzahl von Beacons (604) zu dem Anwendungsserver (602) übertragen werden.

9. Positionierungssystem nach Anspruch 1, wobei der Anwendungsserver (602) ferner dazu konfiguriert ist, Einstellungs- und Konfigurationsinformationen für die Vielzahl von Beacons (604), einschließlich Beacon-Positionen, über ein IEEE-802.15.4-2003-konformes Netzwerk an die Vielzahl von Beacons (604) zu übertragen.

10. Verfahren zum Bestimmen einer Position eines mobilen Tags (606) in einem System, das einen Anwendungsserver (602) und eine Vielzahl von Beacons (604) an einem festen Standort umfasst, wobei die Beacons (604) dazu konfiguriert sind, mit Abhören zu beginnen, kurz bevor das mobile Tag (606) eine Abfrage sendet, und das mobile Tag (606) dazu konfiguriert ist, eine Zeitsynchronisation mit der Vielzahl von Beacons (604) durchzuführen, wobei die Zeitsynchronisation zwischen der Vielzahl von Beacons (604) und dem Tag (606) für eine Zwei-Wege-Entfernungsmessung (TWR) zwischen einem Beacon der Vielzahl von Beacons (604) und dem Tag (606) konfiguriert ist, umfassend:

    Verbinden der Vielzahl von Beacons (604) und des Anwendungsservers (602) mit einem drahtlosen Kommunikationsnetzwerk; Zuweisen, an dem Anwendungsserver (602), einer Vielzahl von Zeitschlitzen für Zwei-Wege-Entfernungsmessungsvorgänge zwischen einem Beacon der Vielzahl von Beacons (604) und dem mobilen Tag (606); Messen der Entfernung des mobilen Tags (606) in Bezug auf mindestens drei Beacons der Vielzahl von Beacons (604); und Übertragen von Informationen über ein mobiles Tag von der Vielzahl von Beacons (604) an den Anwendungsserver (602), wobei das Verfahren ferner Übertragen von Planungsinformationen von dem Anwendungsserver (602) an die Beacons (604) umfasst, um die Beacons (604) zum Abhören gerade rechtzeitig vor einer Übertragung der Abfrage zu aktivieren und somit eine TWR-Messung kurz vor einer Einleitung der TWR-Messung vorzubereiten.

11. Verfahren nach Anspruch 10, wobei das Messen der Entfernung Folgendes umfasst:

    Übertragen, von einem Beacon der Vielzahl von Beacons (604), eines Pakets mit einer bekannten Übertragungszeit; und Empfangen, an dem Beacon (604), eines Rücksignals als Reaktion auf den Empfang des Pakets von dem mobilen Tag.

12. Verfahren nach Anspruch 10, wobei die drahtlose Kommunikation zwischen den Beacons (604) zu dem Anwendungsserver (602) basierend auf einem Kommunikationsstandard durchgeführt wird, wobei die Kommunikation auf einem IEEE-802.15.4-2003-konformen Protokollnetzwerk durchgeführt wird, wobei die Kommunikation auf einem Wireless-HART®-Netzwerk durchgeführt wird, wobei die Entfernungsmessung zwischen dem Tag (606) und einem Beacon (604) der Vielzahl von Beacons (604) auf einer Ultrabreitbandtechnologie (UWB-Technologie) basiert, die mit einem Kommunikationsstandard konform ist, oder die Entfernungsmessung über ein IEEE-802.15.4a-2011-konformes Standardnetzwerk durchgeführt wird, wobei optional eine Zeitsynchronisation für die Vielzahl von Beacons (604) und das Tag (606) zu der Koordination von Entfernungsmessungsmessungen auf einem inhärenten Zeitsynchronisationsmechanismus eines IEEE-802.15.4-2003-konformen Netzwerks basiert.

13. Verfahren nach Anspruch 12, wobei Informationen, welche die Vielzahl von Zeitschlitzen für eine Entfernungsmessung zwischen der Vielzahl von Beacons (604) und dem Tag (606) definieren, Übersprechen zwischen mehreren Messungen verhindern.

14. Verfahren nach Anspruch 13, wobei die Informationen, welche die Vielzahl von Zeitschlitzen definieren, über ein IEEE-802.15.4-2003-konformes Netzwerk von dem Anwendungsserver (602) zu der Vielzahl von Beacons (604) übertragen werden.

15. Verfahren nach Anspruch 11, und ferner umfassend Übertragen von Informationen in Bezug auf Entfernungsmessungsmessungen über ein IEEE-802.15.4-2003-konformes Netzwerk von der Vielzahl von Beacons (604) an den Anwendungsserver (602), Übertragen von Informationen in Bezug auf Tagpositionen über ein IEEE-802.15.4-2003-konformes Netzwerk von der Vielzahl von Beacons (604) an den Anwendungsserver (602) oder Übertragen von Ferneinstellungs- und - konfigurationsinformationen für die Vielzahl von Beacons (604), einschließlich Positionen für die Vielzahl von Beacons (604), über ein IEEE-802.15.4-2003-konformes Netzwerk von dem Anwendungsserver (602) zu der Vielzahl von Beacons (604).

## Revendications

1. Système de positionnement (600), comprenant :

une pluralité de balises (604), chacune d'entre elles est au moins partiellement alimentée par batterie et est configurée pour une communication sans fil ;
un serveur d'application (602) configuré pour communiquer sans fil avec les balises (604) sur la base d'une norme de communication ; et
une étiquette (606) configurée pour effectuer une synchronisation temporelle avec la pluralité de balises (604), dans lequel la synchronisation temporelle entre la pluralité de balises (604) et l'étiquette (606) est configurée pour une télémétrie bidirectionnelle (TWR) entre une balise de la pluralité de balises (604) et l'étiquette (606),
dans lequel la balise (604) est configurée pour commencer à écouter juste avant que l'étiquette (606) soit sur le point d'envoyer une invitation à émettre,
et
dans lequel le serveur d'application (602) est en outre configuré pour transférer des informations de planification aux balises (604) pour activer lesdites balises (604) pour l'écoute juste à temps avant le transfert de l'invitation à émettre, et pour se préparer ainsi à une mesure TWR juste avant une initiation de la mesure TWR.

2. Système de positionnement (600) selon la revendication 1, dans lequel la norme de communication comprend un réseau de protocole conforme à la norme IEEE 802.15.4-2003, ou dans lequel la norme de communication comprend WirelessHART®.

3. Système de positionnement selon la revendication 1, et comprenant en outre :

l'étiquette configurée pour communiquer avec la pluralité de balises, dans lequel la télémétrie entre l'étiquette et la pluralité de balises est basée sur une technologie à ultralarge bande (ULB),
facultativement dans lequel la technologie ULB est conforme à une norme de communication, facultativement dans lequel la norme de communication est une norme conforme à IEEE 802.15.4a-2011.

4. Système de positionnement (600) selon la revendication 1, dans lequel la coordination des mesures TWR entre une balise (604) de la pluralité de balises (604) et l'étiquette (606) est basée sur un mécanisme de synchronisation temporelle inhérent d'un réseau conforme à la norme IEEE 802.15.4-2003.

5. Système de positionnement selon la revendication 1, dans lequel le serveur d'application (602) est configuré pour attribuer des créneaux temporels pour des mesures TWR.

6. Système de positionnement selon la revendication 1, dans lequel le serveur d'application (602) est en outre configuré pour attribuer des créneaux temporels pour des mesures TWR entre une balise (604) de la pluralité de balises (604) et l'étiquette (606), dans lequel des informations qui définissent des créneaux temporels pour TWR entre des balises (604) et des étiquettes (606) sont transférées du serveur d'application (602) aux balises (604) via un réseau conforme à la norme IEEE 802.15.4-2003, facultativement dans lequel les créneaux temporels pour les mesures TWR sont attribués pour empêcher une diaphonie entre de multiples mesures TWR.

7. Système de positionnement (600) selon la revendication 1, dans lequel la pluralité de balises (604) sont configurées pour transmettre des informations relatives aux mesures TWR brutes au serveur d'application (602) par l'intermédiaire d'un réseau conforme à la norme IEEE 802.15.4-2003.

8. Système de positionnement selon la revendication 1, dans lequel des informations relatives à une position de l'étiquette (606) sont transférées depuis au moins trois de la pluralité de balises (604) vers le serveur d'application (602) par l'intermédiaire d'un réseau conforme à la norme IEEE 802.15.4-2003.

9. Système de positionnement selon la revendication 1, dans lequel le serveur d'application (602) est en outre configuré pour transférer des informations d'installation et de configuration pour la pluralité de balises (604), incluant des positions de balise, à la pluralité de balises (604) par l'intermédiaire d'un réseau conforme à la norme IEEE 802.15.4-2003.

**10.** Procédé de détermination d'une position d'une étiquette (606) mobile dans un système comprenant un serveur d'application (602) et une pluralité de balises (604) à emplacement fixe, les balises (604) étant configurées pour commencer à écouter juste avant que l'étiquette (606) mobile soit sur le point d'envoyer une invitation à émettre, et l'étiquette (606) mobile étant configurée pour effectuer une synchronisation temporelle avec la pluralité de balises (604), dans lequel la synchronisation temporelle entre la pluralité de balises (604) et l'étiquette (606) est configurée pour une télémétrie bidirectionnelle (TWR) entre une balise de la pluralité de balises (604) et l'étiquette (606), comprenant :

la connexion de la pluralité de balises (604) et du serveur d'application (602) à un réseau de communication sans fil ;
l'attribution, au niveau du serveur d'application (602), d'une pluralité de créneaux temporels pour des opérations de télémétrie bidirectionnelle entre une balise de la pluralité de balises (604) et l'étiquette (606) mobile ;
la télémétrie de l'étiquette (606) mobile par rapport à au moins trois balises de la pluralité de balises (604) ; et
le transfert d'informations d'étiquette mobile de la pluralité de balises (604) vers le serveur d'application (602),
le procédé comprenant en outre le transfert d'informations de planification depuis le serveur d'application (602) vers les balises (604) pour activer lesdites balises (604) pour l'écoute juste à temps avant le transfert de l'invitation à émettre et pour ainsi se préparer à une mesure TWR juste avant une initiation de la mesure TWR.

**11.** Procédé selon la revendication 10, dans lequel la télémétrie comprend :

la transmission à partir d'une balise de la pluralité de balises (604) d'un paquet avec un temps de transmission connu ; et
la réception au niveau de la balise (604) d'un signal de retour en réponse à la réception du paquet provenant de l'étiquette mobile.

**12.** Procédé selon la revendication 10, dans lequel la communication sans fil entre les balises (604) et le serveur d'application (602) est effectuée sur la base d'une norme de communication, dans lequel la communication est effectuée sur un réseau conforme au protocole IEEE 802.15.4-2003, dans lequel la communication est effectuée sur un réseau WirelessHART®), dans lequel la télémétrie entre l'étiquette (606) et une balise (604) parmi la pluralité de balises (604) est basée sur une technologie à ultralarge bande (ULB) conforme à une norme de communication, ou dans lequel la télémétrie est effectuée sur un réseau conforme à la norme IEEE 802.15.4a-2011,

facultativement, dans lequel la synchronisation temporelle de la pluralité de balises (604) et de l'étiquette (606) pour la coordination des mesures de télémétrie est basée sur un mécanisme de synchronisation temporelle inhérent d'un réseau conforme à la norme IEEE 802.15.4-2003.

**13.** Procédé selon la revendication 12, dans lequel des informations qui définissent la pluralité de créneaux temporels pour la télémétrie entre la pluralité de balises (604) et l'étiquette (606) empêchent des diaphonies entre de multiples mesures.

**14.** Procédé selon la revendication 13, dans lequel les informations qui définissent la pluralité de créneaux temporels sont transférées du serveur d'application (602) à la pluralité de balises (604) via un réseau conforme à la norme IEEE 802.15.4-2003.

**15.** Procédé selon la revendication 11, et comprenant en outre le transfert d'informations relatives aux mesures de télémétrie entre la pluralité de balises (604) et le serveur d'application (602) par l'intermédiaire d'un réseau conforme à la norme IEEE 802.15.4-2003, le transfert d'informations relatives à des positions d'étiquette depuis la pluralité de balises (604) vers le serveur d'application (602) par l'intermédiaire d'un réseau conforme à la norme IEEE 802.15.4-2003 ou le transfert d'informations d'installation et de configuration à distance pour la pluralité de balises (604), incluant des positions de la pluralité de balises (604), depuis le serveur d'application (602) vers la pluralité de balises (604) par l'intermédiaire d'un réseau conforme à la norme IEEE 802.15.4-2003.

Fig. 1

Fig. 2

Fig. 3

600

30m    ◎ BEACON    △ TAG

604    604    604

608    610    612

604    612    610    606    610

608    612

604

602    608    608

LOW POWER NETWORK    UWB RANGING    DATA LINK

620

Fig. 4

# EP 3 455 643 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012087272 A1
- US 2008032705 A1
- US 2009201850 A1
- US 2009070797 A1